# EUROPÄISCHE PATENTSCHRIFT

(11) **EP 2 500 850 B1**
(45) Veröffentlichungstag und Bekanntmachung des Hinweises auf die Patenterteilung: **16.07.2014**
(21) Anmeldenummer: 12154639.4
(22) Anmeldetag: 09.02.2012
(51) Int. Cl.: G06Q 10/00, G08B 13/24, G01S 5/00, G01S 5/02, G06Q 10/08, G06Q 50/28

(54) **Verfahren und System zur Überwachung von Gegenständen**
Method and system for monitoring objects
Procédé et système destinés à la surveillance d'objets

(30) Priorität: 16.03.2011 DE 102011005610
(43) Veröffentlichungstag der Anmeldung: 19.09.2012
(73) Patentinhaber: Deutsche Post AG, 53113 Bonn (DE)
(72) Erfinder: Zehnpfennig, Michael, 53859 Niederkassel (DE)
(74) Vertreter: Jostarndt, Hans-Dieter

(56) Entgegenhaltungen:
- US-A1- 2005 099 302
- US-A1- 2009 322 537

## Beschreibung

Die Erfindung betrifft ein Verfahren zur Überwachung von Gegenständen innerhalb eines Überwachungsraumes, der wenigstens ein Lager umfasst, das vollständig mit mehreren RFID-Lesegeräten ausgeleuchtet ist, um die mit RFID-Transpondern ausgestatteten Gegenstände innerhalb des Lagers zu detektieren.

Die Erfindung betrifft ferner ein System zur Überwachung von Gegenständen innerhalb eines Überwachungsraumes, bestehend aus wenigstens einem Lagerbereich und einem angeschlossenen Umgebungsbereich.

Im Bereich der Logistik wird verstärkt dazu übergegangen, zur Überwachung des Bestands eines Lagers und der Güterbewegungen innerhalb eines Lagers RFID-Technologie einzusetzen. Diese Technologie hat den Vorteil, dass Positionen und Bewegungen von Gütern berührungslos überwacht werden können. Dabei werden beispielsweise einzelne Güter, Behälter und/oder Paletten mit RFID-Transpondern versehen, und im Lager wird eine Infrastruktur aus Lesegeräten installiert. Will man nur den Güterzufluss und Güterabfluss aus einem Lager überwachen, können RFID-Schleusen an den Ein- und Ausgängen des Lagers ausreichen, wodurch registriert werden kann, wenn Güter diese Schleusen passieren. Will man jedoch auch die genaue Position von Gütern im Lager bestimmen können, müssen innerhalb des Lagers weitere Lesegeräte vorhanden sein. Bei Regallagern bzw. Hochregallagern ist es dabei erforderlich, Regaleinheiten mit der notwendigen Anzahl von RFID-Lesegeräten auszustatten, um alle Regalböden vollständig ausleuchten zu können, d.h. Gegenstände mit RFID-Transpondern möglichst sicher auf allen Regalböden erfassen zu können.

Um eine sichere Erfassung von RFID-Transpondern auf Regalböden eines Regallagers zu gewährleisten, müssen jedoch bei der Ausstattung eines Regallagers bestimmte Umgebungsbedingungen, wie leitende Materialen des Regallagers, Abschirmungen, Abstände zwischen Regalbauteilen und Gütern, Überschneidungen von Wechselfeldern der Lesegeräte, etc., beachtet werden, woraus sich üblicherweise die Anzahl der erforderlichen Lesegeräte, deren Anordnung im Regallager sowie die zu verwendenden Frequenzen ergeben, die außerdem innerhalb erlaubter Frequenzbänder liegen müssen.

Aus der internationalen Patentanmeldung WO 2008/027650 A2 sind beispielsweise RFID-Systeme bekannt, die für ein solches Lager verwendet werden können, in dem eine Vielzahl von RFID-Transpondern durch mehrere Lesegeräte erfasst werden muss.

Doch auch bei vollständiger Ausleuchtung eines Lagers mit RFID-Lesegeräten können bestimmte Umstände dazu führen, dass die Position eines Gegenstands nicht mit absoluter Sicherheit ermittelt werden kann. Trotz aufwendiger Infrastruktur innerhalb des Lagers ist es somit oftmals nicht möglich, Gegenstände so genau zu überwachen, dass eine angeschlossene Überwachungseinheit immer sicher über die Position eines Gegenstands informiert ist.

US 2009/322537 offenbart ein System und ein Verfahren zum Verfolgen eines Objektes unter Verwendung eines RFID-Überwachungssystems. Dabei kann ein Sicherheitscontroller mit einem Verkaufsschaltersystem über einen RFID-Anhänger-Lesegerät verbunden sein. Hierbei ist das RFID-Anhänger-Lesegerät mit einem Bereich verknüpft, der über eine Videokamera überwacht werden kann. Wenn das Anhänger-Lesegerät keine Information erkennt, die es vom RFID-Anhänger erhalten hat, kann das Anhänger-Lesergerät die Videokamera aktivieren. Sobald die Videokamera aktiviert wurde, erfasst die Videokamera Bilder und sendet diese zu einem Aufzeichnungsgerät.

US 2005/099302 A1 offenbart die Verwendung von Hochfrequenzidentifikationssystemen zur Verwaltung von Gegenständen innerhalb eines geschützten Bereichs und ein Verfahren zum Erkennen einer unbefugten Entfernung von Gegenständen aus einem_geschützten Bereich. Das System umfasst dabei mehrere Hochfrequenz-HF-Antennen, welche aufgestellt sind, um mehrere Abfragekorridore bereitzustellen und einen HF-Leser, welcher an die mehreren Antennen angeschlossen ist, wobei der HF-Leser einen einzelnen Sender-/Empfänger-T/R-Port aufweist, welcher jeder der Antennen HF-Leistung bereitstellt, um Abfragefelder innerhalb der Abfragekorridore zu erzeugen, und ein kombiniertes Eingangssignal von den Antennen an den HF-Leser liefert, wobei der HF-Leser ein Etikettenerfassungssignal erzeugt, um anzuzeigen, dass mindestens ein Etikett innerhalb der Abfragekorridore vorhanden ist und das System weiterhin eine Weiche aufweist, welche die HF-Leistung von dem HF-Leser empfängt und die HF-Leistung an jede der mehreren Antennen in der Form von mehreren Antennentreibersignalen liefert, wobei die Weiche ein oder mehrere Eingangssignale von den mehreren Antennen empfängt und das eine oder die mehreren Etikettensignale kombiniert, um ein kombiniertes Eingangssignal zu bilden; wobei mehrere Sensoren einen Kunden innerhalb eines der Abfragekorridore erfassen und ein Kundensignal erzeugen; und wobei eine Steuerung, welche beim Empfangen des Etikettenerfassungssignals und des Kundensignals innerhalb einer Zeitspanne ein Alarmsignal ausgibt.

Aufgabe der Erfindung ist es daher, ein verbessertes Verfahren und ein zugehöriges System zur Überwachung von Gegenständen innerhalb eines Überwachungsraumes bereitzustellen, der wenigstens einen Lagerbereich umfasst, der vollständig mit RFID-Lesegeräten ausgeleuchtet ist.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-14. Die Aufgabe wird ferner durch ein zugehöriges System nach Anspruch 15 gelöst.

Das erfindungsgemäße Verfahren eignet sich zur Überwachung von Gegenständen innerhalb eines Überwachungsraumes, der in wenigstens einen Lagerbereich und einen Umgebungsbereich aufgeteilt ist, wobei der Lagerbereich ein Lager umfasst, das vollständig mit mehreren RFID-Lesegeräten ausgeleuchtet ist, um die mit RFID-Transpondern ausgestatteten Gegenstände innerhalb des Lagers zu detektieren. Der Lagerbereich steht in Verbindung mit dem Umgebungsbereich, wobei Gegenstände zwischen dem Lagerbereich und dem Umgebungsbereich bewegt werden. Erfindungsgemäß ist vorgesehen, dass die RFID-Lesegeräte des Lagerbereichs in Verbindung mit einer Lagerauswerteeinheit stehen, welche die Daten der RFID-Lesegeräte des Lagerbereiches empfängt und an eine Umgebungsauswerteeinheit übermittelt. Die Lagerauswerteeinheit ermittelt aus den Daten der RFID-Lesegeräte die wahrscheinlichsten Positionen der Gegenstände im Lager und übermittelt diese Positionen auch an die Umgebungsauswerteeinheit, wobei die Umgebungsauswerteeinheit aus den Daten der RFID-Lesegeräte des Lagers und zusätzlichen Daten ebenfalls die wahrscheinlichsten Positionen der Gegenstände im Lager ermittelt. Daraufhin vergleicht die Umgebungsauswerteeinheit die von der Lagerauswerteeinheit erhaltenen Positionen mit den durch die Umgebungsauswerteeinheit ermittelten Positionen der Gegenstände, und von der Umgebungsauswerteeinheit wird bei voneinander abweichenden Positionen ein Signal erzeugt.

Das erfindungsgemäße Verfahren hat den Vorteil, dass neben den RFID-Leseereignissen des mit RFID-Technologie überwachten Lagers weitere Informationen herangezogen werden können, um die Positionsbestimmung innerhalb des Lagers zu verbessern, wobei das von der Umgebungsauswerteinheit erzeugte Signal im Falle abweichender Positionsbestimmungen auf verschiedene Arten genutzt werden kann.

Vorzugsweise ordnen die Lagerauswerteeinheit und die Umgebungsauswerteeinheit jeder ermittelten Position eines Gegenstands im Lager eine Genauigkeitsstufe zu, wobei die Genauigkeitsstufe aus wenigstens zwei verschiedenen Genauigkeitsstufen ausgewählt wird. Die Lagerauswerteeinheit übermittelt die von ihr ermittelte Genauigkeitsstufe an die Umgebungsauswerteeinheit, welche diese mit der von ihr ermittelten Genauigkeitsstufe kombiniert und eine resultierende Gesamtgenauigkeitsstufe ermittelt und ein Signal erzeugt, wenn die resultierende Gesamtgenauigkeitsstufe eine vorgegebene Höhe unterschreitet.

Wenn die Genauigkeit der Positionsbestimmung durch die Lagerauswerteeinheit auch bei Hinzuziehung ergänzender Informationen nicht ausreichend hoch ist, wird dies durch ein Signal signalisiert, das dann zu geeigneten Maßnahmen führen kann. Sowohl bei abweichenden Positionsbestimmungen als auch bei einer Gesamtgenauigkeitsstufe unterhalb einer vorgegebenen Größe kann das Signal beispielsweise von der Umgebungsauswerteeinheit an die Lagerauswerteeinheit übermittelt werden, welche daraufhin eine wiederholte Erfassung von RFID-Transpondern innerhalb des Lagers durch alle RFID-Lesegeräte initiiert. So kann die Genauigkeit der Positionsbestimmung durch die Lagerauswerteeinheit iterativ erhöht werden.

Es kann jedoch auch vorgesehen sein, dass daraufhin eine wiederholte Erfassung von RFID-Transpondern innerhalb des Lagers nur durch ausgewählte RFID-Lesegeräte initiiert wird. Insbesondere wird nur mit denjenigen RFID-Lesegeräten eine wiederholte Erfassung von RFID-Transpondern durchgeführt, in deren Lesebereich es zu voneinander abweichenden Positionsbestimmungen und/oder zu einer Gesamtgenauigkeitsstufe unterhalb einer vorgegebenen Höhe gekommen ist. Hierdurch verringert sich der Aufwand für eine erneute Lesung erheblich.

Die zusätzlichen Daten, die von der Umgebungsauswerteinheit zur Ermittlung der Positionen von Gegenständen im Lager verwendet werden, umfassen wenigstens Daten von RFID-Lesegeräten innerhalb des Umgebungsbereiches. Alternativ oder ergänzend können auch Daten von Kameras innerhalb des Umgebungsbereiches und/oder Auftragsdaten verwendet werden.

Bei den zu überwachenden Gegenständen handelt es sich beispielsweise um Paletten, die mit mehreren Einzelgütern beladen sind, wobei jede Palette mit einem RFID-Transponder versehen ist. Dabei kann vorgesehen sein, dass der RFID-Transponder einer Palette mittels einer Deaktivierungsvorrichtung als deaktiviert registriert und dadurch nicht mehr im Überwachungsraum überwacht wird. Ferner kann jedes Einzelgut ebenfalls jeweils mit einem RFID-Transponder versehen sein, der nach Deaktivierung des RFID-Transponders der Palette als aktiviert registriert und dadurch im Überwachungsraum überwacht wird. Durch diesen Vorgang kann eine Überwachung auf verschiedenen Ebenen erreicht werden, wenn beispielsweise nach der Auflösung einer Palettenbeladung nun die einzelnen Güter überwacht werden sollen.

Von der Erfindung umfasst ist ferner ein System zur Überwachung von Gegenständen, wobei die Lagerauswerteeinheit und die Umgebungsauswerteinheit Mittel zur Durchführung des erfindungsgemäßen Verfahrens aufweisen.

Die Erfindung eignet sich insbesondere zur Überwachung von wertvollen Gegenständen, bei denen es oftmals zu Verlusten durch Diebstahl kommt. Manipulationen an der RFID-Infrastruktur eines Lagerebereiches und/oder an zu überwachenden Gegenständen zum Zwecke eines Diebstahls von Gegenständen können so erschwert und aufgedeckt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung eines Überwachungsraumes, umfassend wenigstens einen Lagerbereich und einen Umgebungsbereich, für den das erfindungsgemäße Verfahren eingesetzt werden kann;
- Fig. 2: eine schematische Seitenansicht eines mit Paletten beladenen Regals mit RFID-Lesegeräten; und
- Fig. 3: die Darstellung des erfindungsgemäßen Verfahrens anhand eines Ablaufschemas.

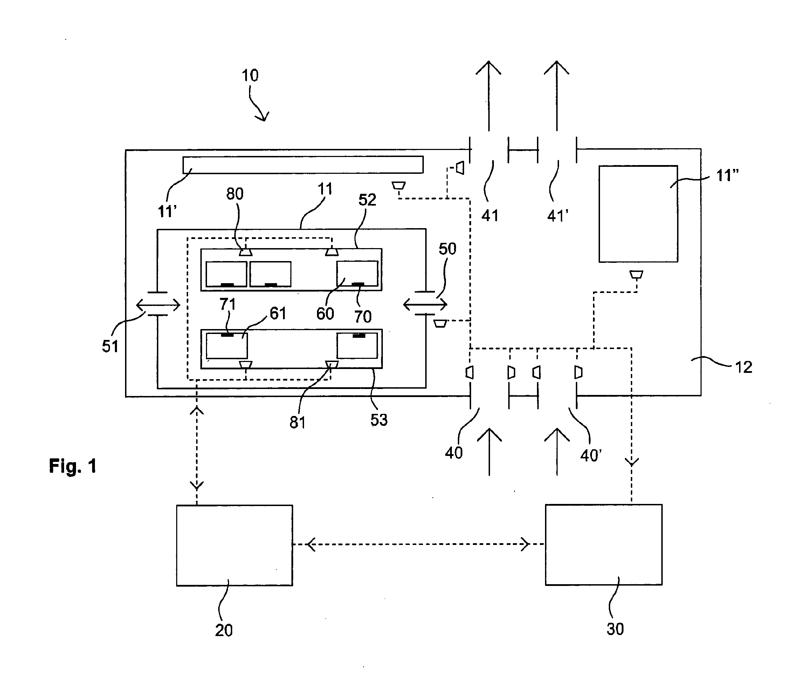

Fig. 1 zeigt eine schematische Darstellung eines Überwachungsraumes 10, für den das erfindungsgemäße Verfahren eingesetzt werden kann, indem die Position und/oder die Bewegung von Gegenständen innerhalb des Überwachungsraumes 10 überwacht werden. Als Gegenstände im Sinne dieser Erfindung werden sowohl Waren, Produkte, Rohstoffe, Behälter, Transportpaletten, etc. angesehen.

Der Überwachungsraum 10 kann insbesondere durch ein Gebäude begrenzt sein, aber auch durch einen beliebig definierten Bereich gebildet werden. Beispielsweise können neben einem Gebäude auch an das Gebäude anschließende Bereiche zum Überwachungsraum gehören, oder der Überwachungsraum ist nur ein Teilbereich eines Gebäudes. Vorzugsweise weist der Überwachungsraum 10 wenigstens einen Eingang 40, 40' auf, über den Gegenstände in den Überwachungsraum 10 eingebracht werden. Wenigstens ein zugehöriger Ausgang 41, 41' dient dann zum Ausbringen von Gegenständen aus dem Überwachungsraum 10. Bei den mehreren Ein- und Ausgängen kann es sich beispielsweise um Tore eines Lagergebäudes handeln. Allerdings können die Ein- und Ausgänge auch zusammenfallen, so dass Gegenstände durch beliebige Ein- und Ausgänge in den Überwachungsraum eingebracht und wieder aus diesem entfernt werden können.

Die zu überwachenden Gegenstände sind mit einem RFID-Transponder versehen, und vorzugsweise ist an jedem Ein- und Ausgang bereits wenigstens ein RFID-Lesegerät vorgesehen, um die Bewegung eines Gegenstands mit einem zugeordneten RFID-Transponder detektieren zu können. Bei diesen RFID-Lesegeräten kann es sich beispielsweise um RFID-Portale handeln, durch welche Gegenstände bewegt werden müssen, wenn sie einen Ein- oder Ausgang passieren. Die Lesegeräte der Portale registrieren die zugehörigen Transponder, wobei jedem Transponder eindeutig ein Gegenstand zugeordnet werden kann.

Es kann auch vorgesehen sein, dass Gegenstände erst nach Einbringung in den Überwachungsraum 10 mit RFID-Transpondern versehen werden, die dann anschließend durch Lesegeräte erfasst werden. Die Transponder der Gegenstände können beispielsweise auch durch Handscanner oder andere Einrichtungen mit RFID-Lesegeräten erfasst werden, wenn dies die Infrastruktur des Überwachungsraumes 10 vorgibt. Ferner kann vorgesehen sein, dass Gegenstände nicht nur an den Ein- und Ausgängen des Überwachungsraumes 10 erfasst werden, sondern auch an beliebigen anderen Stellen innerhalb des Überwachungsraumes 10. Beispielsweise können innerhalb des Überwachungsraumes 10 mehrere Lagerbereiche 11, 11',11', Etikettierbereiche, Kommissionierbereiche, etc. vorgesehen sein, in denen die Position bzw. Bewegung eines Gegenstands mit RFID-Technologie registriert wird.

Insbesondere umfasst der Überwachungsraum 10 wenigstens einen Lagerbereich 11, in dem Gegenstände temporär gelagert werden, bevor sie zu einer anderen Position bewegt werden. Es können jedoch auch weitere Lagerbereiche 11', 11" innerhalb des Überwachungsraumes 10 vorhanden sein. Der Lagerbereich 11 umfasst wenigstens ein Lager, bei dem es sich im einfachsten Fall um mehrere Stellplätze auf einem Hallenboden, aber auch um ein Regal oder Hochregallager handeln kann. Der Lagerbereich 11 kann beispielsweise zwei Regale 52, 53 mit mehreren Lagerebenen umfassen, in denen vorzugsweise mehrere übereinander angeordnete Regalböden vorgesehen sind, die horizontal verlaufen und auf denen Güter einzeln platziert werden können. Dabei kann es sich um ein größeres Hochregallager handeln, dessen obere Regalböden üblicherweise nur mit Gabelstaplern zugängig sind. In einem solchen Hochregallager werden Güter typischerweise auf Paletten ein- und ausgelagert, und in einer zentralen Datenverarbeitungsanlage wird protokolliert, welche Palette mit welchen Gütern an welchem Stellplatz im Regallager positioniert ist. So kann zum einen der gesamte Güterbestand im Lager erfasst werden, als auch Gabelstapler bzw. deren Fahrer entsprechend angesteuert werden, um bestimmte Paletten gezielt von einem Stellplatz auslagern zu können.

Um eine funkbasierte Überwachung von Gegenständen in einem solchen Lagerbereich 11 zu erreichen, wird jeder Gegenstand mit einem RFID-Transponder, nachfolgend auch kurz Transponder genannt, versehen. Das Regallager wird ferner mit einer Vielzahl von RFID-Lesegeräten ausgestattet, um die Transponder der Gegenstände im Regalsystem erfassen zu können. Ein RFID-Lesegerät im Sinne dieser Erfindung ist dadurch gekennzeichnet, dass es mindestens eine Antenne an ein Lesegerät koppelt und dadurch in der Lage ist, mit einem passiven RFID-Transponder gemäß den jeweils gültigen lokalen Funk-Regularien zu kommunizieren. Sind mehrere Antennen an das Lesegerät angeschlossen, so bezeichnet der Begriff Lesegerät im Sinne dieser Erfindung jeweils eine Antenne, da deren Position, Winkel und technische Eigenschaften die Erfassung eines RFID-Transponders maßgeblich beeinflussen.

Im Transponder ist eine eindeutige Kennung hinterlegt, die in einer zentralen Datenverarbeitungsanlage direkt einem Gegenstand/Gut zugeordnet sein kann. Bei Gütern, die in Behältern oder auf Paletten kommissioniert sind, ist die eindeutige Kennung dem jeweiligen Transport- bzw. Aufbewahrungsmittel zugeordnet und in der zentralen Datenverarbeitungsanlage ist hinterlegt, welche Güter wiederum diesem Transportmittel zugeordnet sind. So ist über die Überwachung des Transportmittels auch eine Überwachung der damit verbundenen Güter möglich.

Dies hat gegenüber einer visuellen Kennzeichnung beispielsweise von Paletten den Vorteil, dass der Gabelstaplerfahrer eine Palette nicht im Lager suchen muss, wenn er sie auslagern soll, sondern ihm kann mitgeteilt werden, an welchem Stellplatz in welchem Regal sich eine bestimmte Palette befindet und der Gabelstaplerfahrer kann diese Palette anfahren und aufnehmen, ohne dass er Informationen von der Palette ablesen muss. Dies erfordert natürlich, dass der Stellplatz der Palette genau bekannt ist und dem Fahrer des Gabelstaplers angezeigt werden kann. Das Gleiche kann für die Einlagerung von Paletten gelten.

In Fig. 1 sind im Lagerbereich 11 zur Erläuterung der Erfindung beispielhaft zwei parallele Regale 52 und 53 von oben dargestellt, deren oberer Regalboden jeweils mit mehreren Paletten 60, 61 belegt ist. Dabei sind nicht alle Stellplätze auf den Regalböden belegt, sondern nur fünf von acht maximal möglichen Stellplätzen. Zwischen diesen beiden Regalen 52, 53 können sich Flurförderzeuge wie Gabelstapler bewegen und gezielt Paletten aus den Regalen entnehmen bzw. in diese einstellen.

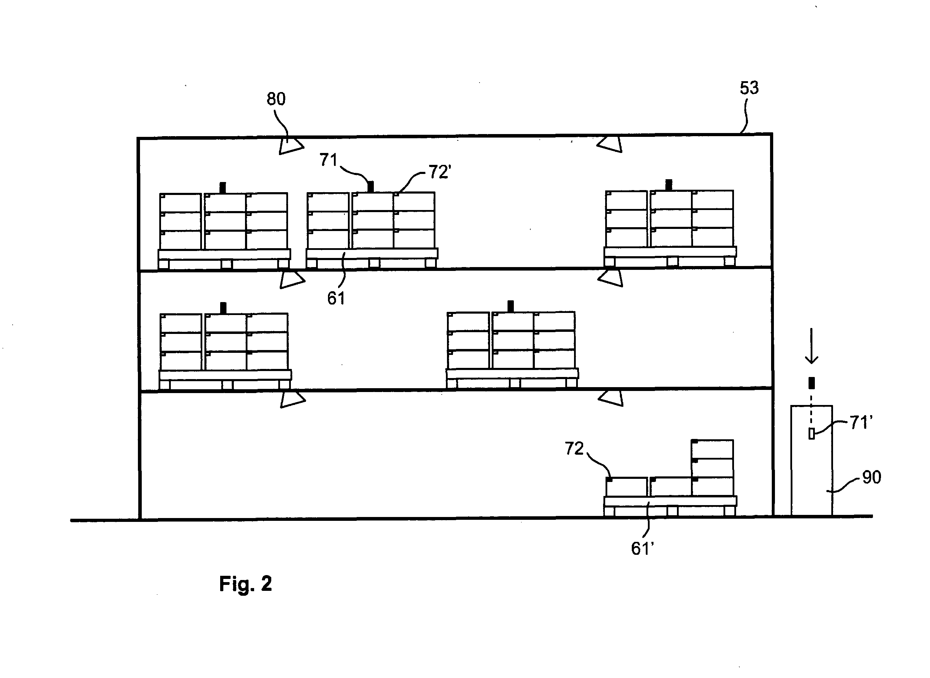

Fig. 2 zeigt ein solches Regal 53 in einer schematischen Seitenansicht. Das Regal 53 umfasst drei Lagerebenen, auf denen jeweils vier Stellplätze für Paletten 61 vorhanden sind. Jede Lagerebene ist mit mehreren RFID-Lesegeräten 80, 81 bzw. Antennen ausgestattet, um den jeweiligen Regalboden vollständig auszuleuchten, so dass RFID-Transponder an möglichst allen Positionen auf diesem Regalboden erfasst werden können. Beispielsweise ist jeweils ein RFID-Transponder 71 direkt an jeder Palette 61 oder den darauf befindlichen Gütern angebracht. In dem in der Fig. 2 dargestellten Ausführungsbeispiel der Erfindung ist an den Gütern jeder Palette im oberen Bereich jeweils ein Transponder 71 angebracht. Diese Anordnung ist vorteilhaft, wenn die zugehörigen Lesegeräte oberhalb der Paletten an einer horizontalen Halterung angebracht sind, wie es in diesem Ausführungsbeispiel mit zwei Lesegeräten 80 der Fall ist. Die Halterung kann beispielsweise durch eine Strebe oder den nächst höheren Regalboden gebildet werden, an der/dem die Lesegeräte 80 angebracht werden. Je nach Ausführung der Lesegeräte bzw. dem gewählten RFID-System kann jedoch auch eine andere Anzahl von Lesegeräten vorgesehen sein.

Die Lesegeräte 80 können auch hinter den Paletten 61 angebracht sein, wobei die Transponder 71 in diesem Fall ebenfalls im hinteren Bereich an den Paletten angeordnet sein sollten. Auch eine Anbringung von Lesegeräten unterhalb der Paletten ist möglich, wobei die Transponder in diesem Fall unten an den Paletten angebracht sein sollten. Insbesondere bei Gütern und/oder Verpackungen aus Materialien, die abschirmend wirken und so die verlässliche Erfassung von Transponder erschweren, hat es sich jedoch als vorteilhaft erwiesen, dass die Transponder oben an einem Gut angebracht werden. So können sie von darüber befindlichen Lesegeräten oberhalb des Gutes erfasst werden, auch wenn die Güter unterschiedliche Höhen haben bzw. Paletten unterschiedlich hoch mit Gütern beladen sind.

Der jeweilige Transponder wird vorzugsweise an der Oberseite der beladenen Palette angebracht, wobei er von der Oberseite absteht, um negative Beeinflussungen durch den Inhalt und das Material der Palette zu vermeiden und den Transponder zuverlässig erfassen zu können. Der Transponder 71 kann aber auch an der vorderen Oberkante der Palette 61 angebracht werden, was den Vorteil hat, dass er auch von vorne zu sehen ist. Ist der Transponder 71 beispielsweise in ein aufklebbares Label integriert, das zusätzlich bedruckt werden kann, können diese aufgedruckten Informationen von vorne abgelesen werden. Ferner kann von vorne geprüft werden, ob die Palette 61 mit einem Transponder versehen ist. Auch bei Anbringung des Transponders 71 an der vorderen Oberkante einer Palette 61 steht er vorzugsweise nach oben ab, um negative Beeinflussungen durch den Inhalt und das Material der Palette zu vermeiden und den Transponder 71 zuverlässig erfassen zu können.

In der Fig. 2 ist ein Transponder 71 stets vorne und oberhalb der vorderen Oberkante an einer Palette angebracht, jedoch dient dies nur der Vereinfachung der Darstellung und ist nicht als Beschränkung anzusehen. Die Anbringung des Transponders 71 richtet sich nach dem jeweiligen Anwendungsfall und der Ausgestaltung der Palette 61, wobei lediglich die Ausrichtung des Transponders 71 zum Lesegerät 80 bzw. des Lesegerätes 80 zum Transponder 71 so gewählt werden sollte, dass der Abstand möglichst kurz ist bzw. keine negativen Abschirmungen auftreten.

Als RFID-Transponder 71 können handelsübliche Transponder verwendet werden, die vom Fachmann entsprechend ausgestaltet sein können, wobei vorzugsweise passive Transponder ohne eigene Stromversorgung eingesetzt werden. Der Aufbau eines RFID-Transponders sieht prinzipiell eine Antenne, einen analogen Schaltkreis zum Empfangen und Senden (Transceiver), sowie einen digitalen Schaltkreis und einen permanenten Speicher vor. Die verwendeten RFID-Transponder arbeiten beispielsweise im Bereich der Langwelle bei 125-134 kHz, der Kurzwelle bei 13,56 MHz, der UHF bei 865-869 MHz bzw. 950 MHz oder der SHF bei 2,45 GHz und 5,8 GHz.

Vorzugsweise werden für derartige Systeme zur Überwachung von Lagern passive UHF-Transponder eingesetzt, da diese besonders kostengünstig sind, einfach an einer Palette angebracht werden können und auch von vielen Firmen genutzt werden. Dadurch müssen beispielsweise keine weiteren Transponder mehr an der Palette angebracht werden, wenn Paletten bereits mit Transpondern versehen das Lager erreichen. Vielmehr besteht dann die Möglichkeit, diese Transponder weiter zu nutzen und so zusätzlich Kosten zu sparen.

Die im Regalsystem angebrachten Lesegeräte 80 erzeugen jeweils ein hochfrequentes elektromagnetisches Wechselfeld, dem die Transponder der Güter im Bereich dieses Wechselfeldes ausgesetzt sind. Die vom Transponder über die Antenne aufgenommene Energie dient während des Kommunikationsvorganges als Stromversorgung für den Transponder. Der so aktivierte Mikrochip im Transponder decodiert die vom Lesegerät gesendeten Befehle und codiert und moduliert die Antwort in das eingestrahlte elektromagnetische Feld. Damit überträgt der Transponder wenigstens seine eigene unveränderliche Seriennummer oder auch weitere Daten des gekennzeichneten Gegenstands an das Lesegerät, so dass das betreffende Lesegerät Transponder im Bereich seines Wechselfeldes erfassen und identifizieren kann.

Die Reichweite des Lesegerätes hängt dabei im Wesentlichen von der Energie des Wechselfeldes ab, wobei es sich bei Betrieb eines Hochregallagers als vorteilhaft erwiesen hat, dass ein Lesegerät eine Leistung von bis zu 2 Watt (ERP) aussenden kann. Hierbei steht die Abkürzung ERP für *Effective Radiated Power* oder *Equivalent Radiated Power,* was eine standardisierte theoretische Maßeinheit für die effektive Strahlungsleistung darstellt. Die effektive Strahlungsleistung ist das Produkt der in eine Sendeantenne eingespeisten Leistung multipliziert mit deren Antennengewinn. Wird keine Richtung angegeben, gilt der Wert für die Hauptstrahlrichtung der Sendeantenne, in der gleichzeitig ihr Antennengewinn am größten ist. Vorzugsweise liegt der volle Öffnungswinkel der Antenne eines Lesegerätes nahe bei 70°, so dass in einem Winkel von 35° zur Hauptstrahlrichtung noch mindestens die Hälfte der maximalen Leistung abgestrahlt wird.

In einem bevorzugten Ausführungsbeispiel der Erfindung verwendet das RFID-System den sogenannten 4-Kanal-Plan, bei dem nur auf 4 von 10 Hochleistungskanälen gesendet wird, wobei es sich nach den derzeitig geltenden Funk-Regularien um die Kanäle 4, 7, 10 und 13 handelt, wenn die ETSI-Norm EN 302 208 in der neusten Version (V 1.2.1) in geltendes Recht umgesetzt wurde. Dadurch kann das System von der so genannten "Listen Before Talk"-Regel (LBT) befreit werden, die in Europa dazu dient, das dem UHF-Bereich zur Verfügung stehende sehr schmale Frequenzband besser zwischen den diversen Nutzern aufzuteilen. Um eine schnelle Zuteilung der Frequenz für die neue Technologie zu ermöglichen, schreibt die LBT-Regel vor, dass ein Lesegerät vor dem Senden prüfen muss, ob ein anderer Dienst im Kanal arbeitet. Ist dies der Fall, muss es auf einen anderen Kanal ausweichen. Zudem dürfen die Lesegeräte nur vier Sekunden lang senden, bevor sie wieder das Vorhandensein anderer Nutzungen prüfen müssen. Da dies in der Praxis zu Problemen führt, hat sich der 4-Kanal-Plan für die Erfindung als vorteilhaft erwiesen, da zwar nur auf 4 Kanälen gesendet werden darf, die LBT-Regel jedoch nicht berücksichtigt werden muss. Der Betrieb anderer RFID-Systeme auf UHF-Frequenzen im Bereich des Systems sollte in diesem Fall jedoch vermieden werden, um die Lokalisierungsgenauigkeit und die Zuverlässigkeit der aus den RFID-Signalen gewonnenen Aussagen nicht zu beinträchtigen. Jedoch können auf den anderen Kanälen parallel zum 4-Kanal-Betrieb der RFID-Anwendungen leistungsschwache Funkanwendungen mit einer kurzen Reichweite, sogenannte Short Range Devices (SRD), betrieben werden.

Vorzugsweise ist die Position der RFID-Lesegeräte veränderlich, so dass die RFID-Infrastruktur des Lagerbereiches an unterschiedliche Gegebenheiten angepasst werden kann. Beispielsweise können die Lesegeräte horizontal verschiebbar und/oder schwenkbar ausgeführt sein. Ferner hat es sich als vorteilhaft erwiesen, das Energieniveau des ausgestrahlten Wechselfeldes der Lesegeräte variabel auszuführen. So kann das Energieniveau zwischen zwei Werten variiert werden, wobei einige Transponder bei einem bestimmten Energieniveau noch erfasst werden können und bei einem tieferen Energieniveau nicht mehr. Diese Informationen können ausgewertet und zur Bestimmung der Position von Transpondern herangezogen werden.

Ergänzend zu einem RFID-Transponder 71 an jeweils einer Palette 61 können die auf der Palette befindlichen Einzelgüter ebenfalls mit jeweils einem Transponder versehen sein, wobei diese Transponder vorzugsweise wahlweise erfasst bzw. registriert werden. So kann eine Überwachung von Gegenständen auf unterschiedlichen Ebenen stattfinden. Ist es beispielsweise ausreichend, dass die Position und die Bewegung von beladenen Paletten überwacht werden, weil sicher ist, dass die Beladung einer Palette nicht aufgelöst wird, werden nur die Transponder 71 an den Paletten im Überwachungssystem registriert und verfolgt, während die Transponder an den auf der Palette 61 befindlichen Einzelgütern deaktiviert sind bzw. nicht registriert und verfolgt werden. Dies ist in der Fig. 2 dadurch dargestellt, dass der Paletten-Transponder 71 schwarz ausgefüllt ist, während weitere Transponder 72' an den Einzelgütern auf der Palette 61 nicht ausgefüllt sind.

Soll dagegen eine genauere Überwachung erfolgen, um auch Bewegungen von Einzelgütern auf eine Palette und/oder von einer Palette zu registrieren, werden die Transponder an den Einzelgütern zusätzlich oder alternativ zu den Transpondern an den Paletten aktiviert bzw. registriert und verfolgt. Dies kann beispielsweise zweckmäßig sein, wenn die Beladung einer Palette aufgelöst wird, wie es in Fig. 2 für die rechte Palette 61' auf dem unteren Regalboden dargestellt ist. Sollen beispielsweise Einzelgüter von der Palette 61' entnommen und anderweitig kommissioniert werden, kann eine Schrumpffolie von den Einzelgütern entfernt werden, um Zugriff auf die Einzelgüter zu erlangen. Damit würde auch der an der Schrumpffolie angebrachte RFID-Transponder 71 entfernt, und eine weitere Erfassung dieses Transponders im System würde zu falschen Überwachungsergebnissen führen. Daher sollte dieser Transponder 71 deaktiviert werden, was beispielsweise durch eine Deaktivierungsvorrichtung 90 im Bereich des Regallagers erfolgen kann. Nach Entfernung des Transponders 71 von der Palette 61' könnte er von einer Person in diese Vorrichtung 90 eingeworfen oder an einem Lesegerät der Vorrichtung 90 vorbeigeführt werden. Eine Person könnte aber auch ein mobiles Deaktivierungsgerät in die Nähe des Transponders 71 halten, um ihn so zu deaktivieren, wobei der dann deaktivierte Transponder in der Fig. 2 mit der Bezugsziffer 71' gekennzeichnet ist.

Dieser Transponder 71' würde dann als deaktiviert im System registriert, was zur Folge hätte, dass seine Position und Bewegung nicht mehr erfasst und verfolgt wird. Er könnte dabei durch die Deaktivierungsvorrichtung 90 so verändert werden, dass seine Anwesenheit in der Nähe von RFID-Lesegeräten zu keinem Signal mehr führen würde. Er könnte aber auch noch erfassbar, jedoch als nicht aktiviert im System registriert sein. Die letztere Ausführungsform hätte den Vorteil, dass der Transponder zu einem anderen Zeitpunkt wieder eingesetzt und dann wieder als aktiviert im System registriert werden könnte. Denkbar sind ferner jegliche andere Ausführungsformen, mit denen sichergestellt werden kann, dass der deaktivierte Transponder zumindest temporär nicht mehr zur Bestimmung der Position und Bewegung von Paletten und/oder Einzelgütern herangezogen wird.

Die Deaktivierung des Paletten-Transponders 71 geht vorzugsweise einher mit der Aktivierung der Transponder 72' der Einzelgüter auf der Palette 61', so dass nun eine Überwachung auf einer tieferen Ebene stattfinden und dabei die Position und Bewegung der einzelnen Güter überwacht werden kann. Die nun aktivierten Transponder der Einzelgüter sind daher für die Palette 61' schwarz ausgefüllt dargestellt und mit der Bezugsziffer 72 versehen, während der entfernte Paletten-Transponder 71' nach der Deaktivierung nicht mehr schwarz ausgefüllt dargestellt ist. Die Aktivierung der Einzelgut-Transponder 72 kann beispielsweise automatisiert nach der Deaktivierung des Paletten-Transponders 71' erfolgen. Dem Paletten-Transponder 71 wurden dann zuvor die jeweiligen Einzelgut-Transponder 72' der Einzelgüter der jeweiligen Palette zugeordnet und sobald der Paletten-Transponder deaktiviert wird, werden die zugehörigen Einzelgut-Transponder aktiviert.

Es kann jedoch auch vorgesehen sein, dass bereits durch das verwendete Protokoll zwischen zu erfassenden Transpondern selektiert werden kann. Beispielsweise kann durch das Protokoll vorgegeben werden, ob alle Transponder antworten sollen, nur die Paletten-Transponder oder nur die Einzelgut-Transponder. So kann auch eine Ausführungsform realisiert werden, bei der auf der unteren Regalebene nur Einzelgut-Transponder gelesen werden, da diese Ebene dazu verwendet wird, um Paletten aufzulösen und Einzelgüter neu zu kommissionieren. In den höheren Regalebenen kann dann auf der Ebene der Paletten-Transponder gelesen werden, da auf diesen Regalböden stets nur vollständige Paletten platziert werden.

Durch die beschriebene RFID-Infrastruktur innerhalb des Lagerbereichs 11 kann die Position und Bewegung von Gegenständen innerhalb des Lagerbereichs überwacht werden, wobei eine solche Infrastruktur üblicherweise an eine Lagerauswerteeinheit 20 angeschlossen ist, welche die erfassten Lesesignale der diversen RFID-Lesegeräte 80, 81 auswertet. Um verlässliche Aussagen über die Position von Transpondern und damit zugeordneten Gegenständen innerhalb des Lagers machen zu können, müssen jedoch neben den reinen Leseergebnissen weitere Faktoren in die Auswertung einfließen. Dazu gehört beispielsweise die Information, ob Transponder nur von einem oder mehreren Lesegeräten erfasst wurden und welche Transponder bei einer Variation des Energieniveaus der Lesegeräte noch erfasst wurden und welche nicht. Selbst wenn dann mit den zur Verfügung stehenden Informationen die wahrscheinliche Position eines Gegenstands im Lager ermittelt werden kann, kann diese Position mehr oder weniger genau sein, so dass jeder Position vorzugsweise eine Genauigkeitsstufe (Konfidenzniveau) zugeordnet wird. Bei diesen Genauigkeitsstufen kann es sich im einfachsten Fall um zwei Stufen handeln, d.h. eine Stufe "Hohes Konfidenzniveau" und eine zweite Stufe "Geringes Konfidenzniveau". Zusätzlich kann es bei Bedarf weitere Abstufungen oder sogar Konfidenzniveaus durch die Angabe von Prozentzahlen geben.

In das Konfidenzniveau können beispielsweise Information dazu einfließen, ob auch Nachbarplätze eines Gegenstands belegt sind. Befinden sich in der Nähe des erfassten Transponders eines Gegenstands weitere Transponder, erhöht dies das Risiko einer Fehlinterpretation der erfassten RFID-Signale. Befinden sich dagegen keine weiteren Transponder in der Nähe, dürfte die Positionsbestimmung dieses einzelnen Transponders eine hohe Genauigkeit haben. Auch wenn ein Transponder zum ersten Mal im Regal erfasst wird und lokalisiert werden muss, kann dies negativ in das Konfidenzniveau einfließen im Vergleich zu bereits mehrmals erfassten Transpondern, deren Position durch wiederholte Lesungen relativ sicher ist. Auch widersprüchliche Lokalisierungen und/oder zwischen zwei Stellplätzen hin- und her springende Positionen können das Konfidenzniveau herabsetzen.

So kann durch eine an die RFID-Lesegeräte des Lagerbereiches 11 angeschlossene Lagerauswerteeinheit 20 die Position von Gegenständen fortlaufend erfasst und überwacht werden, wobei jeder Position eine bestimmte Genauigkeitsstufe zugeordnet wird. Der Überwachungsbereich 10 umfasst jedoch neben dem Lagerbereich 11 auch noch einen Umgebungsbereich 12, der punktuell ebenfalls mit RFID-Lesegeräten, Kameras und/oder sonstigen Überwachungseinrichtungen versehen sein kann. Oftmals sind im gesamten Überwachungsraum 10, dessen Teil das überwachte Lager lediglich ist, somit weitere Informationen verfügbar, die zur Auswertung und zur genaueren Überwachung von Gegenständen herangezogen werden können, auch wenn der Umgebungsbereich 12 nicht wie der Lagerbereich 11 vollständig mit RFID-Lesegeräten ausgeleuchtet ist. Beispielsweise werden RFID-Transponder von Gegenständen in Schleusen an den Ein- und Ausgängen 40, 40', 41, 41' des Überwachungsraumes 10 oder durch mobile Lesegeräte erfasst. Diese Informationen können einer zentralen Umgebungsauswerteeinheit 30 zur Verfügung stehen und Bewegungen von Gegenständen innerhalb des Umgebungsbereiches 12 umfassen.
Auch an den Ein- und Ausgängen 50, 51 des Lagerbereiches können RFID-Schleusen vorgesehen sein, deren Leserergebnisse der Umgebungsauswerteeinheit 30 mitteilen können, ob und wann ein Gegenstand in den Lagerbereich 11 ein- und ausgelagert wurde.

Ferner können in der Umgebungsüberwachungseinheit 30 Informationen zu Aufträgen hinterlegt sein, die Lieferungen in und aus dem Überwachungsraum 10 betreffen. So ist bekannt, welche Gegenstände wann im Überwachungsraum ankommen sollten und wann und wie sie den Überwachungsraum wieder verlassen sollen.

Diese zusätzlichen Informationen können nicht nur dazu genutzt werden, um die Position von Gegenständen außerhalb des Lagerbereiches 11 zu überwachen, sondern auch um die Positionsbestimmung innerhalb des Lagerbereiches 11 zu verbessern. Erfindungsgemäß übermittelt die Lagerauswerteeinheit 20 die ihr zur Verfügung stehenden Daten an die Umgebungsauswerteeinheit 30, welche sie mit nur ihr zur Verfügung stehenden Daten kombiniert. Registriert die Lagerauswerteinheit 20 beispielsweise einen Transponder und damit einen Gegenstand an einer bestimmten Position innerhalb des Lagerbereiches 11, die Umgebungsauswerteeinheit 30 hat jedoch Informationen darüber, dass dieser Transponder gerade die RFID-Schleuse eines Ausgangs 50, 51 des Lagerbereiches 11 passiert hat, spricht dies für eine fehlerhafte oder zumindest ungenaue Lesung durch die RFID-Infrastruktur des Lagerbereiches 11. Auch wenn die Lagerauswerteeinheit 20 die zugehörige Positionsbestimmung aufgrund ihrer

Informationen mit einem hohen Konfidenzniveau versehen hat, wird die Gesamtgenauigkeit der Lesung durch die Informationen der Umgebungsauswerteeinheit 30 herabgesetzt. In diesem Fall wird von der Umgebungsauswerteeinheit 30 ein Signal erzeugt, das auf verschiedene Arten verarbeitet werden kann. Vorzugsweise wird das Signal an die Lagerauswerteeinheit 20 gesendet, welche daraufhin eine erneute Lesung durch die RFID-Infrastruktur des Lagerbereichbereiches 11 initiiert, um das vorherige Lesergebnis zu bestätigen oder zu revidieren. Es kann dabei vorgesehen sein, dass alle RFID-Lesegeräte des Lagerbereiches 11 eine neue Lesung durchführen oder nur ausgewählte Lesegeräte im Bereich des Transponders, dessen Position in Frage steht.

Dabei können jedoch nicht nur voneinander abweichende Positionsbestimmungen zu einem Signal und einer Senkung des Konfidenzniveaus führen, sondern auch sonstige Ereignisse. Erfasst beispielsweise eine Überwachungskamera im Lagerbereich 11 eine Bewegung in der Nähe eines Regals, in dem keine Bewegung erfolgen dürfte, da hierfür kein Auftrag vorliegt und/oder die Lagerauswerteeinheit 20 für diesen Bereich keine Positionsveränderung von Transpondern registriert hat, könnte dies auf einen unbefugten Zugriff auf Einzelgüter hinweisen. Eine solche Situation könnte sich beispielsweise dadurch erklären lassen, dass Transponder von Einzelgütern oder Paletten entfernt wurden. Die Transponder verbleiben dann auf einem Stellplatz im Regal, während die Einzelgüter voraussichtlich widerrechtlich entfernt wurden. Auch wenn die Lesung der RFID-Lesegeräte innerhalb des Lagerbereiches 11 in diesem Fall korrekt war und zurecht mit einem hohen Konfidenzniveau versehen wurde, kann diese Genauigkeitsstufe durch die widersprechenden Daten der Umgebungsauswerteeinheit 30 bis zur abschließenden Klärung der Situation erheblich gesenkt werden. Hierbei führt das Signal der Umgebungsauswerteinheit 30 zu einem Alarm, der zu einer visuellen Überprüfung des betreffenden Stellplatzes führen könnte.

Das Gleiche gilt für einen Transponder, für den die Lagerauswerteeinheit 20 registriert, dass sich dieser innerhalb des Lagerbereiches 11 bewegt, obwohl dazu nach den Auftragsdaten der Umgebungsauswerteeinheit 30 keine Veranlassung besteht. Auch dies könnte zu einer Senkung des Konfidenzniveaus durch die Umgebungsauswerteinheit 30 und zu einem Signal führen. Das Signal könnte beispielsweise auch eine sofortige Überprüfung der Positionsbestimmung durch eine erneute Lesung initiieren. Möglich ist auch ein Alarm, der die Ein- und Ausgänge 50, 51 des Lagerbereiches 11 verschließt.

Den beispielhaft aufgeführten Ausführungen ist gemeinsam, dass die Umgebungsauswerteeinheit 30 über zusätzliche Daten verfügt, welche der Lagerauswerteeinheit 20 nicht zur Verfügung stehen. Dies ist oftmals der Fall, wenn die RFID-Infrastruktur nebst Lagerauswerteeinheit als Paket von einem Anbieter erworben wird, der sich auf diese Technologie spezialisiert hat, es aber schwierig oder nicht gewollt ist, dieses Paket so anzupassen, dass der Lagerauswerteeinheit 20 neben den RFID-Leseergebnissen aus dem Lagerbereich 11 weitere Daten zur Verfügung gestellt werden. Daher sieht die Erfindung vor, dass zwischen der Lagerauswerteeinheit 20 mit der RFID-Infrastruktur des Lagerbereiches 11 und der Umgebungsauswerteeinheit 30 ein Informationsaustausch und eine Interaktion stattfinden.

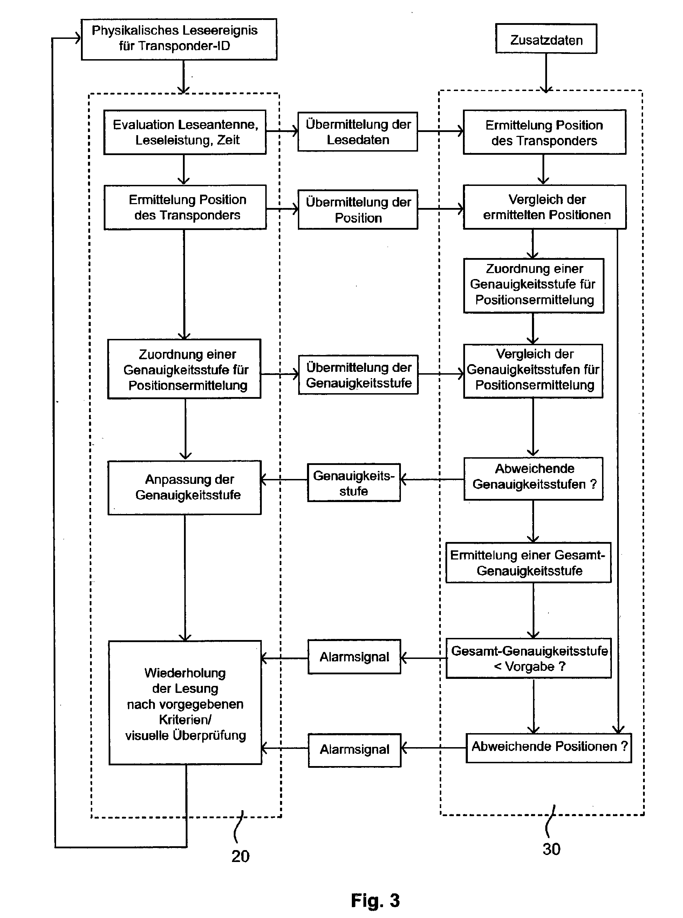

Die Vorgehensweise bei der erfindungsgemäßen Interaktion zwischen der Lagerauswerteeinheit 20 und der Umgebungsauswerteeinheit 30 soll beispielhaft anhand des Ablaufschemas in Fig. 3 erläutert werden, wobei die Vorgänge innerhalb der Lagerauswerteeinheit 20 und der Umgebungsauswerteeinheit 30 durch gestrichelte Linien getrennt voneinander dargestellt sind. Dabei steht am Anfang ein physikalisches Leseereignis für eine bestimmte Transponder-ID, das von einem oder mehreren Lesegeräten erzeugt wird, da ein Transponder je nach Position des zugeordneten Gegenstands von einem oder mehreren Lesegeräten gleichzeitig erfasst werden könnte. Die Lagerauswerteinheit 20 stellt daraus fest, welche Lesegeräte das Leseereignis wann erzeugt haben und wie hoch die Leseleistung war. Diese Daten werden von der Lagerauswerteeinheit 20 dazu verwendet, die wahrscheinlichste Position des zugeordneten Gegenstands zu ermitteln.

Parallel dazu werden diese Lesedaten an die Umgebungsauswerteeinheit 30 übergeben. Diese versucht aus den erhaltenen Lesedaten ebenfalls die Position des Gegenstands zu ermitteln, wobei jedoch ergänzende Zusatzdaten verwendet werden. Bei diesen Zusatzdaten kann es sich beispielsweise um Leseereignisse von RFID-Lesegeräten innerhalb des Umgebungsbereiches 12, um Daten von Kameras innerhalb des Überwachungsraumes 10 und/oder um Auftragsdaten zu Gegenständen handeln. Aus diesen Gesamtdaten ermittelt die Umgebungsauswerteeinheit ebenfalls die wahrscheinlichste Position für den Gegenstand mit der betreffenden Transponder-ID. Die Lagerauswerteeinheit 20 übergibt die von ihr ermittelte Position an die Umgebungsauswerteineinheit 30 und diese vergleicht die beiden ermittelten Positionen miteinander. Kommen beide Einheiten zu unterschiedlichen Ergebnissen für die wahrscheinlichste Position des Gegenstands, erzeugt die Umgebungsauswerteeinheit 30 ein entsprechendes Signal. Dieses Signal wird vorzugsweise an die Lagerauswerteeinheit 20 gesendet, welche daraufhin eine erneute Lesung innerhalb des Lagerbereiches 11 initiiert, um die strittige Position zu bestätigen oder zu revidieren. Dabei kann diese erneute Lesung alle RFID-Lesegeräte umfassen oder nur eine bestimmte Auswahl von Lesegeräten. Beispielsweise kann es vorteilhaft sein, nur mit denjenigen RFID-Lesegeräten eine erneute Lesung durchzuführen, die sich im Bereich des Gegenstands befinden, dessen Positionsbestimmung nicht eindeutig war.

Ergänzend zur Ermittlung der wahrscheinlichsten Position eines Gegenstands ordnet die Lagerauswerteeinheit 20 jeder Positionsbestimmung auch eine von mehreren Genauigkeitsstufen zu, wobei zur Festlegung der Genauigkeit die Daten der Leseereignisse verwendet werden und wenigstens die zuvor beschriebenen Kriterien zur Anwendung kommen können. Zusätzlich kann berücksichtigt werden, ob in der Nähe der Position weitere RFID-Aktivität auftritt und/oder die Antennen hohe Reflexionen (Störungen) messen.

Die Umgebungsauswerteeinheit 30 ordnet der von ihr ermittelten Position ebenfalls eine Genauigkeitsstufe zu, wobei jedoch alle ihr zur Verfügung stehenden Daten verwendet werden, also auch Daten aus dem Umgebungsbereich bzw. von Datenquellen, die der Lagerauswerteeinheit 20 nicht zur Verfügung stehen. Beispielsweise kann auch die Historie des Stellplatzes und/oder des Transponders berücksichtigt werden, die der Lagerauswerteeinheit 20 gegebenenfalls nicht vorliegt, wenn diese keine Historien abspeichert, sondern nur die aktuellen Belegzustände des Lagers vorhält.

Diese Bewertung durch die Umgebungsauswerteeinheit 30 kann somit eine andere Genauigkeitsstufe ergeben als die der Lagerauswerteeinheit 20. Weichen die so ermittelten Genauigkeitsstufen voneinander ab, wird durch die Umgebungsauswerteeinheit ebenfalls ein Signal erzeugt. Dieses Signal kann auf verschiedene Arten verwertet werden. Liegt die von der Umgebungsauswerteeinheit 30 zugeordnete Genauigkeitsstufe unterhalb der von der Lagerauswerteeinheit 20 ermittelten Genauigkeitsstufe, kann beispielsweise vorgesehen sein, dass diese niedrigere Genauigkeitsstufe an die Lagerauswerteeinheit 20 übermittelt wird und dort die bisher zugeordnete Genauigkeitsstufe ersetzt, d.h. das die bisherige Genauigkeitsstufe überschrieben wird. Die Lagerauswerteeinheit 20 hat dadurch die Information erhalten, dass die Genauigkeitsstufe aufgrund ergänzender Daten herabgesetzt werden muss.

Das Gleiche kann jedoch auch im umgekehrten Fall erfolgen, wenn die Genauigkeitsstufe der Lagerauswerteeinheit 20 geringer ist als die Genauigkeitsstufe der Umgebungsauswerteeinheit 30. Dies würde darauf hindeuten, dass eine vergleichsweise ungenaue Positionsbestimmung innerhalb des Lagers durch ergänzende Daten bestätigt werden konnte und die Genauigkeitsstufe somit erhöht werden kann.

Ferner kann vorgesehen sein, dass die Umgebungsauswerteeinheit 30 aus der Genauigkeitsstufe der Lagerauswerteeinheit 20 und der selbst ermittelten Genauigkeitsstufe eine Gesamtgenauigkeitsstufe bildet. Liegt diese Gesamtgenauigkeitsstufe unterhalb einer bestimmten Vorgabe, wird von der Umgebungsauswerteeinheit 30 ein Signal erzeugt. Dieses Signal kann wie bei abweichenden Positionsbestimmungen an die Lagerauswerteeinheit 20 gesendet werden, welche daraufhin eine erneute Lesung innerhalb des Lagerbereiches 11 initiiert, um die bisher zu unsichere Positionsbestimmung zu verbessern. Dabei kann diese erneute Lesung wieder alle RFID-Lesegeräte umfassen oder nur eine bestimmte Auswahl von Lesegeräten im Bereich des Gegenstands mit der unsicheren Positionsbestimmung. Ferner kann vorgesehen sein, dass eine andere Art der Lesung durchgeführt wird als beim ersten Mal. Beispielsweise kann das Energieniveau von RFID-Lesegeräten variiert werden, um daraus Daten zu erhalten, die bei der ersten Lesung eventuell nicht berücksichtigt wurden. Lässt sich die Genauigkeitsstufe dadurch erhöhen, wird diese in der Lagerauswerteeinheit 20 und der Umgebungsauswerteeinheit 30 entsprechend geändert, bis die Gesamtgenauigkeitsstufe die vorgegebene Höhe erreicht hat.

Dieser Vorgang kann auch eine visuelle Überprüfung der Position des betreffenden Gegenstands im Lager umfassen. Kann die Position des Gegenstands dann eindeutig festgestellt werden, kann die Genauigkeitsstufe sowohl in der Lagerauswerteeinheit 20 als auch in der Umgebungsauswerteeinheit 30 hoch bzw. maximal angesetzt werden.

Ferner kann vorgesehen sein, dass die ermittelte Position eines Gegenstands fortlaufend von der Umgebungsauswerteeinheit mit Auftragsdaten für diesen Gegenstand abgeglichen wird. Wird ein Gegenstand in einem Bereich erfasst, der gemäß den Auftragsdaten wahrscheinlich für die nächste erforderliche Bewegung ist, wird dies als normaler Vorgang registriert. Passt die Position eines Gegenstands nicht zu den Auftragsdaten, kann ein Alarm ausgelöst werden.

Die Lagerauswerteeinheit 20 kann sich lokal in der Nähe des Lagerbereiches 11 befinden, während die Umgebungsauswerteeinheit 30 entfernt von dem Überwachungsraum 10 angeordnet ist. So kann es sich um eine zentrale Umgebungsauswerteeinheit handeln, die an mehrere Überwachungsräume und damit auch mehrere Lagerauswerteeinheiten angeschlossen ist. Die Umgebungsauswerteeinheit kann beispielsweise durch eine Oracle SOA Suite gebildet werden, wobei für die Echtzeitdatenströme zwischen den lokalen Lagerauswerteeinheiten und der zentralen Umgebungsauswerteeinheit das Produkt CEP (Complex Event Processing) von Oracle eingesetzt werden kann.

### Bezugszeichenliste:

- 10: Überwachungsraum
- 11,11',11": Lagerbereich
- 12: Umgebungsbereich
- 20: Lagerauswerteeinheit
- 30: Umgebungsauswerteeinheit
- 40,40': Eingang des Überwachungsraumes
- 41,41': Ausgang des Überwachungsraumes
- 50,51: Ein- und Ausgang des Lagerbereiches
- 52,53: Regal
- 60,61,61': Gegenstand, Gut, Einzelgut, Palette
- 70,71: RFID-Transponder an Palette
- 71': RFID-Transponder an Palette, deaktiviert
- 72: RFID-Transponder an Einzelgut
- 72': RFID-Transponder an Einzelgut, deaktiviert
- 80,81: RFID-Lesegerät
- 90: Deaktivierungsvorrichtung

## Patentansprüche

1. Verfahren zur Überwachung von Gegenständen innerhalb eines Überwachungsraumes (10), der in wenigstens einen Lagerbereich (11) und einen Umgebungsbereich (12) aufgeteilt ist, wobei der Lagerbereich (11) ein Lager umfasst, das vollständig mit mehreren RFID-Lesegeräten (80;81) ausgeleuchtet ist, um die mit RFID-Transpondern (70;71;71';72;72') ausgestatteten Gegenstände innerhalb des Lagers zu detektieren, und der Lagerbereich (11) in Verbindung mit dem Umgebungsbereich (12) steht, wobei Gegenstände zwischen dem Lagerbereich (11) und dem Umgebungsbereich (12) bewegt werden,
wobei die RFID-Lesegeräte (80;81) des Lagerbereiches (11) in Verbindung mit einer Lagerauswerteeinheit (20) stehen, welche die Daten der RFID-Lesegeräte (80;81) des Lagerbereiches (11) empfängt **dadurch gekennzeichnet, dass** die Lagerauswerteeinheit die Daten der RFID-Lesegerate (80;81) des Lagerbereiches (11) an eine Umgebungsauswerteeinheit (30) übermittelt, und die Lagerauswerteeinheit (20) aus den Daten der RFID-Lesegeräte (80;81) die wahrscheinlichsten Positionen der Gegenstände im Lager ermittelt und diese Positionen auch an die Umgebungsauswerteeinheit (30) übermittelt, wobei die Umgebungsauswerteeinheit (30) aus den Daten der RFID-Lesegeräte (80;81) des Lagers und zusätzlichen Daten, die von der Umgebungsauswerteinheit (30) zur Ermittlung der Positionen von Gegenständen im Lager verwendet werden, ebenfalls die wahrscheinlichsten Positionen der Gegenstände im Lager ermittelt, und die Umgebungsauswerteeinheit (30) die von der Lagerauswerteeinheit (20) erhaltenen Positionen der Gegenstände mit den durch die Umgebungsauswerteeinheit (30) ermittelten Positionen der Gegenstände vergleicht und von der Umgebungsauswerteeinheit (30) bei voneinander abweichenden Positionen ein Signal erzeugt wird, das von der Umgebungsauswerteeinheit (30) an die Lagerauswerteeinheit (20) übermittelt wird.

2. Verfahren nach Anspruch 1,
**dadurch gekennzeichnet,**
**dass** die Lagerauswerteeinheit (20) und die Umgebungsauswerteeinheit (30) jeder ermittelten Position eines Gegenstands im Lager eine Genauigkeitsstufe zuordnen.

3. Verfahren nach Anspruch 2,
**dadurch gekennzeichnet,**
**dass** die Genauigkeitsstufe aus wenigstens zwei verschiedenen Genauigkeitsstufen ausgewählt wird.

4. Verfahren nach einem oder beiden der Ansprüche 2 und 3,
**dadurch gekennzeichnet,**
**dass** die Lagerauswerteeinheit (20) die von ihr ermittelte Genauigkeitsstufe an die Umgebungsauswerteeinheit (30) übermittelt, welche diese mit der von ihr ermittelten Genauigkeitsstufe kombiniert und eine resultierende Gesamtgenauigkeitsstufe ermittelt und das Signal erzeugt, wenn die resultierende Gesamtgenauigkeitsstufe eine vorgegebene Höhe unterschreitet.

5. Verfahren nach einem oder mehreren der Ansprüche 1 bis 4,
**dadurch gekennzeichnet,**
**dass** das Signal von der Umgebungsauswerteeinheit (30) an die Lagerauswerteeinheit (20) übermittelt wird, welche daraufhin eine wiederholte Erfassung von RFID-Transpondern (70;71;71';72;72') innerhalb des Lagers durch alle RFID-Lesegeräte (80;81) initiiert.

6. Verfahren nach einem oder mehreren der Ansprüche 1 bis 4,
**dadurch gekennzeichnet,**
**dass** das Signal von der Umgebungsauswerteeinheit (30) an die Lagerauswerteeinheit (20) übermittelt wird, welche daraufhin eine wiederholte Erfassung von RFID-Transpondern (70;71;71';72;72') innerhalb des Lagers durch ausgewählte RFID-Lesegeräte (80;81) initiiert.

7. Verfahren nach Anspruch 6,
**dadurch gekennzeichnet,**
**dass** mit denjenigen RFID-Lesegeräten (80;81) eine wiederholte Erfassung von RFID-Transpondern (70;71;71';72;72') durchgeführt wird, in deren Lesebereich es zu voneinander abweichenden Positionsbestimmungen und/oder zu einer Gesamtgenauigkeitsstufe unterhalb einer vorgegebenen Höhe gekommen ist.

8. Verfahren nach Anspruch 6,
**dadurch gekennzeichnet,**
**dass** mit denjenigen RFID-Lesegeräten (80;81) eine wiederholte Erfassung von RFID-Transpondern (70;71;71';72;72') durchgeführt wird, in deren Lesebereich die resultierende Gesamtgenauigkeitsstufe von ermittelten Positionen eine vorgegebene Höhe unterschritten hat.

9. Verfahren nach einem oder mehreren der Ansprüche 1 bis 8,
**dadurch gekennzeichnet,**
**dass** die zusätzlichen Daten wenigstens Daten von RFID-Lesegeräten innerhalb des Umgebungsbereiches (12) umfassen.

10. Verfahren nach einem oder mehreren der Ansprüche 1 bis 9,
**dadurch gekennzeichnet,**
**dass** die zusätzlichen Daten wenigstens Daten von Kameras innerhalb des Umgebungsbereiches (12) und/oder des Lagerbereiches (11) umfassen.

11. Verfahren nach einem oder mehreren der Ansprüche 1 bis 10,
**dadurch gekennzeichnet,**
**dass** die zusätzlichen Daten wenigstens Auftragsdaten umfassen, die Lieferungen der Gegenstände in und aus dem Überwachungsraum (10) betreffen.

12. Verfahren nach einem oder mehreren der Ansprüche 1 bis 11,
**dadurch gekennzeichnet,**
**dass** es sich bei den Gegenständen um Paletten (60;61;61') handelt, die mit mehreren Einzelgütern beladen sind, wobei jede Palette (60;61;61') mit einem RFID-Transponder (70;71;71') versehen ist.

13. Verfahren nach Anspruch 12,
**dadurch gekennzeichnet,**
**dass** der RFID-Transponder (70;71) einer Palette (60;61;61') mittels einer Deaktivierungsvorrichtung (90) als deaktiviert registriert und dadurch nicht mehr im Überwachungsraum (10) überwacht wird.

14. Verfahren nach Anspruch 13,
**dadurch gekennzeichnet,**
**dass** jedes Einzelgut jeweils mit einem RFID-Transponder (72;72') versehen ist, der nach Deaktivierung des RFID-Transponders (70;71) der Palette (60;61;61') als aktiviert registriert und dadurch im Überwachungsraum (10) überwacht wird.

15. System zur Überwachung von Gegenständen, umfassend einen Überwachungsraum (10), der in wenigstens einen Lagerbereich (11) und einen Umgebungsbereich (12) aufgeteilt ist, wobei der Lagerbereich (11) ein Lager umfasst, das vollständig mit mehreren RFID-Lesegeräten (80;81) ausgeleuchtet ist, um mit RFID-Transpondern (70;71;71';72;72') ausgestattete Gegenstände innerhalb des Lagers zu detektieren, wobei der Lagerbereich (11) in Verbindung mit dem Umgebungsbereich (12) steht und Gegenstände zwischen dem Lagerbereich (11) und dem Umgebungsbereich (12) bewegbar sind,
**dadurch gekennzeichnet,**
**dass** dem Lagerbereich (11) eine Lagerauswerteeinheit (20) und dem Umgebungsbereich (12) eine Umgebungsauswerteinheit (30) mit Mitteln zur Durchführung des Verfahrens nach einem der Ansprüche 1 bis 14 zugeordnet sind.

## Claims

1. A method for monitoring objects within a monitoring space (10) that is divided into at least one warehouse area (11) and a surrounding area (12), whereby the warehouse area (11) comprises a warehouse that is completely covered by several RFID readers (80; 81) that serve to detect the objects provided with RFID transponders (70; 71; 71; 72; 72') within the warehouse, and the warehouse area (11) is connected to the surrounding area (12), whereby objects are moved between the warehouse area (11) and the surrounding area (12), whereby the RFID readers (80; 81) in the warehouse area (11) are connected to an evaluation unit (20) for the warehouse, which receives data from the RFID readers (80; 81) in the warehouse area (11),
**characterized in that**
the evaluation unit for the warehouse transmits the data from the RFID readers (80; 81) in the warehouse area (11) to an evaluation unit (30) for the surroundings, and the evaluation unit (20) for the warehouse determines the most likely positions of the objects in the warehouse on the basis of the data from the RFID readers (80; 81) and then transmits these positions to the evaluation unit (30) for the surroundings, whereby the evaluation unit (30) for the surroundings likewise determines the most likely positions of the objects in the warehouse on the basis of the data from the RFID readers (80; 81) in the warehouse as well as on the basis of additional data that is used by the evaluation unit (30) for the surroundings to determine the positions of objects in the warehouse, and the evaluation unit (30) for the surroundings compares the data about the positions of the objects received from the evaluation unit (20) for the warehouse to the positions of the objects determined by the evaluation unit (30) for the surroundings, and, if these positions differ from each other, the evaluation unit (30) for the surroundings generates a signal that it then transmits to the evaluation unit (20) for the warehouse.

2. The method according to claim 1,
**characterized in that**
the evaluation unit (20) for the warehouse and the evaluation unit (30) for the surroundings assign a precision rating to each position determined for an object in the warehouse.

3. The method according to claim 2,
**characterized in that**
the precision rating is selected from at least two different precision ratings.

4. The method according to one or both of claims 2 and 3,
**characterized in that**
the evaluation unit (20) for the warehouse transmits the precision rating it has determined to the evaluation unit (30) for the surroundings which then combines it with the precision rating that the evaluation unit (30) for the surroundings has determined, and the latter determines a resulting total precision rating and then generates the signal if the resulting total precision rating falls below a prescribed level.

5. The method according to one or more of claims 1 to 4,
**characterized in that**
the signal is transmitted by the evaluation unit (30) for the surroundings to the evaluation unit (20) for the warehouse which, in response, initiates a new detection of RFID transponders (70; 71; 71'; 72; 72') within the warehouse by all of the RFID readers (80; 81).

6. The method according to one or more of claims 1 to 4,
**characterized in that**
the signal is transmitted by the evaluation unit (30) for the surroundings to the evaluation unit (20) for the warehouse which, in response, initiates a new detection of RFID transponders (70; 71; 71'; 72; 72') within the warehouse by selected RFID readers (80; 81).

7. The method according to claim 6,
**characterized in that**
a new detection of RFID transponders (70; 71; 71'; 72; 72') is carried out with those RFID readers (80; 81) in whose reading range positions were determined that differ from each other and/or in which a total precision rating was found that is below a prescribed level.

8. The method according to claim 6,
**characterized in that**
a new detection of RFID transponders (70; 71; 71'; 72; 72') is carried out with those RFID readers (80; 81) in whose reading range the resulting total precision rating of the positions determined has fallen below a prescribed level.

9. The method according to one or more of claims 1 to 8,
**characterized in that**
the additional data includes at least data from RFID readers within the surrounding area (12).

10. The method according to one or more of claims 1 to 9,
**characterized in that**
the additional data includes at least data from cameras within the surrounding area (12) and/or the warehouse area (11).

11. The method according to one or more of claims 1 to 10,
**characterized in that**
the additional data includes at least order data relating to deliveries into and out of the monitoring space (10).

12. The method according to one or more of claims 1 to 11,
**characterized in that**
the objects are pallets (60; 61; 61') that are loaded with several individual products, whereby each pallet (60; 61; 61') is provided with an RFID transponder (70; 71; 71').

13. The method according to claim 12,
**characterized in that**
by means of a deactivation device (90), the RFID transponder (70; 71) of a pallet (60; 61; 61') is registered as being deactivated, as a result of which it is no longer being monitored in the monitoring space (10).

14. The method according to claim 13,
**characterized in that**
after the deactivation of the RFID transponder (70; 71) on the pallet (60; 61; 61'), an RFID transponder (72; 72') provided on each individual product is registered as being activated, as a result of which it is monitored in the monitoring space (10).

15. A system for monitoring objects, comprising a monitoring space (10) that is divided into at least one warehouse area (11) and one surrounding area (12), whereby the warehouse area (11) encompasses a warehouse that is completely covered by several RFID readers (80; 81) that serve to detect the objects provided with RFID transponders (70; 71; 71'; 72; 72') within the warehouse, whereby the warehouse area (11) is connected to the surrounding area (12), and objects are moved between the warehouse area (11) and the surrounding area (12),
**characterized in that**
an evaluation unit (20) for the warehouse is associated with the warehouse area (11) and an evaluation unit (30) for the surroundings having means to carry out the method according to one of claims 1 to 14 is associated with the surrounding area (12).

## Revendications

1. Procédé de surveillance d'objets au sein d'un espace de surveillance (10) qui est divisé en au moins une zone d'entrepôt (11) et une zone d'environnement (12), dans lequel la zone d'entrepôt (11) comprend un entrepôt qui est entièrement éclairé de plusieurs lecteurs RFID (80 ; 81) pour détecter les objets équipés de transpondeurs RFID (70 ; 71 ; 71' ; 72 ; 72') au sein de l'entrepôt, et la zone d'entrepôt (11) est en liaison avec la zone d'environnement (12), dans lequel des objets sont déplacés entre la zone d'entrepôt (11) et la zone d'environnement (12),
dans lequel les lecteurs RFID (80 ; 81) de la zone d'entrepôt (11) sont en liaison avec un module d'évaluation d'entrepôt (20) qui reçoit les données des lecteurs RFID (80 ; 81) de la zone d'entrepôt (11), **caractérisé en ce que** le module d'évaluation d'entrepôt transmet les données des lecteurs RFID (80 ; 81) de la zone d'entrepôt (11) à un module d'évaluation d'environnement (30), et le module d'évaluation d'entrepôt (20) détermine à partir des données des lecteurs RFID (80 ; 81) les positions les plus probables des objets dans l'entrepôt et transmet également ces positions au module d'évaluation d'environnement (30), dans lequel le module d'évaluation d'environnement (30) détermine, à partir des données des lecteurs RFID (80 ; 81) de l'entrepôt et de données supplémentaires qui sont utilisées par le module d'évaluation d'environnement (30) pour déterminer les positions d'objets dans l'entrepôt, également les positions les plus probables des objets dans l'entrepôt, et le module d'évaluation d'environnement (30) compare les positions des objets obtenues par le module d'évaluation d'entrepôt (20) aux positions des objets déterminées par le module d'évaluation d'environnement (30) et un signal qui est transmis du module d'évaluation d'environnement (30) au module d'évaluation d'entrepôt (20) est généré par le module d'évaluation d'environnement (30) en cas de positions s'écartant les unes des autres.

2. Procédé selon la revendication 1,
**caractérisé en ce**
**que** le module d'évaluation d'entrepôt (20) et le module d'évaluation d'environnement (30) associent un degré de précision à chaque position déterminée d'un objet dans l'entrepôt.

3. Procédé selon la revendication 2,
**caractérisé en ce**
**que** le degré de précision est sélectionné parmi au moins deux degrés de précision différents.

4. Procédé selon une des revendications 2 et 3 ou les deux,
**caractérisé en ce**
**que** le module d'évaluation d'entrepôt (20) transmet le degré de précision qu'il a déterminé au module d'évaluation d'environnement (30) qui combine celui-ci au degré de précision qu'il a déterminé, et détermine un degré de précision global résultant et génère le signal lorsque le degré de précision global résultant dépasse par le bas une hauteur prédéfinie.

5. Procédé selon une ou plusieurs des revendications 1 à 4,
**caractérisé en ce**
**que** le signal est transmis du module d'évaluation d'environnement (30) au module d'évaluation d'entrepôt (20) qui initie suite à cela une détection répétée de transpondeurs RFID (70 ; 71 ; 71' ; 72 ; 72') au sein de l'entrepôt par l'ensemble des lecteurs RFID (80 ; 81).

6. Procédé selon une ou plusieurs des revendications 1 à 4,
**caractérisé en ce**
**que** le signal est transmis du module d'évaluation d'environnement (30) au module d'évaluation d'entrepôt (20) qui initie suite à cela une détection répétée de transpondeurs RFID (70 ; 71 ; 71' ; 72 ; 72') au sein de l'entrepôt par des lecteurs RFID sélectionnés (80 ; 81).

7. Procédé selon la revendication 6,
**caractérisé en ce**
**qu'**une détection répétée de transpondeurs RFID (70 ; 71 ; 71' ; 72 ; 72') est effectuée avec les lecteurs RFID (80 ; 81) dans la zone de lecture desquels il s'est produit des déterminations de position s'écartant les unes des autres et/ou un degré de précision global en dessous d'une hauteur prédéfinie.

8. Procédé selon la revendication 6,
**caractérisé en ce**
**qu'**une détection répétée de transpondeurs RFID (70 ; 71 ; 71' ; 72 ; 72') est effectuée avec les lecteurs RFID (80 ; 81) dans la zone de lecture desquels le degré de précision global résultant de positions déterminées a dépassé par le bas une hauteur prédéfinie.

9. Procédé selon une ou plusieurs des revendications 1 à 8,
**caractérisé en ce**
**que** les données supplémentaires comprennent au moins des données de lecteurs RFID au sein de la zone d'environnement (12).

10. Procédé selon une ou plusieurs des revendications 1 à 9,
**caractérisé en ce**
**que** les données supplémentaires comprennent au moins des données de caméras au sein de la zone d'environnement (12) et/ou de la zone d'entrepôt (11).

11. Procédé selon une ou plusieurs des revendications 1 à 10,
**caractérisé en ce**
**que** les données supplémentaires comprennent au moins des données de commande qui concernent des livraisons des objets dans et depuis l'espace de surveillance (10).

12. Procédé selon une ou plusieurs des revendications 1 à 11,
**caractérisé en ce**
**qu'**il s'agit pour les objets de palettes (60 ; 61 ; 61') qui sont chargées de plusieurs produits individuels, dans lequel chaque palette (60 ; 61 ; 61') est pourvue d'un transpondeur RFID (70 ; 71 ; 71').

13. Procédé selon la revendication 12,
**caractérisé en ce**
**que** le transpondeur RFID (70 ; 71) d'une palette (60 ; 61 ; 61') est enregistré comme désactivé au moyen d'un dispositif de désactivation (90) et n'est ainsi plus surveillé dans l'espace de surveillance (10).

14. Procédé selon la revendication 13,
**caractérisé en ce**
**que** chaque produit individuel est pourvu d'un transpondeur RFID (72 ; 72') qui est enregistré comme activé après désactivation du transpondeur RFID (70 ; 71) de la palette (60 ; 61 ; 61') et est ainsi surveillé dans l'espace de surveillance (10) .

15. Système de surveillance d'objets, comprenant un espace de surveillance (10) qui est divisé en au moins une zone d'entrepôt (11) et une zone d'environnement (12), dans lequel la zone d'entrepôt (11) comprend un entrepôt qui est entièrement éclairé de plusieurs lecteurs RFID (80 ; 81) pour détecter des objets équipés de transpondeurs RFID (70 ; 71 ; 71' ; 72 ; 72') au sein de l'entrepôt, dans lequel la zone d'entrepôt (11) est en liaison avec la zone d'environnement (12) et des objets peuvent être déplacés entre la zone d'entrepôt (11) et la zone d'environnement (12),
**caractérisé en ce**
**qu'**un module d'évaluation d'entrepôt (20) est associé à la zone d'entrepôt (12) et un module d'évaluation d'environnement (30) est associé à la zone d'environnement (12) avec des moyens pour réaliser le procédé selon une des revendications 1 à 14.
